# EUROPEAN PATENT SPECIFICATION

(11) **EP 1 015 378 B1**
(45) Date of publication and mention of the grant of the patent: **17.04.2002**
(21) Application number: 98934657.2
(22) Date of filing: 20.07.1998
(51) Int. Cl.: B66F 9/20, G05G 9/04

(54) **MULTI-FUNCTION CONTROL HANDLE**
VIELFUNKTIONSREGELGRIFF
POIGNEE DE COMMANDE MULTIFONCTION

(30) Priority: 25.07.1997 US 53722 P; 25.07.1997 US 53739 P; 29.09.1997 US 60288 P
(43) Date of publication of application: 05.07.2000
(73) Proprietor: CROWN EQUIPMENT CORPORATION, New Bremen, Ohio 45869 (US)
(72) Inventor: BERGMAN, Brent, A., Yorkshire, OH 45388 (US); TREGO, Allen, T., New Bremen, OH 45869 (US)
(74) Representative: Cummings, Sean Patrick
(86) International application number: US9814969
(87) International publication number: WO9905060

(56) References cited:
- EP-A1- 0 459 183
- CH-A5- 631 818
- DE-C2- 3 117 414
- US-A- 4 646 582

## Description

### BACKGROUND OF THE INVENTION

The present invention relates in general to fork lift trucks and, more particularly, to the mounting of a multi-function control handle which is generally horizontally oriented so that the handle can be moved in any direction with approximately the same force, at least as perceived by an operator of a truck including the invention.

Control handles for several types of fork lift trucks are oriented vertically; however, on some trucks, for example rider reach trucks, the control handles are oriented generally horizontally. Typically, a horizontally orientated multi-function control handle includes an elongated body which is moved forward and backward to operate sensors and switches which control the direction and speed of travel of the truck, and upward and downward to operate sensors to control raising and lowering of forks of the truck. Additional control sensors and switches may be located at the end of the handle to control auxiliary functions of the truck, such as to control fork tilt, reach, and side shift. A horn button and selector switch may also be located at the end of the control handle. These auxiliary switches are usually manipulated by the operator's thumb and forefinger.

For durability and long life in the normally harsh operating environment in which fork lift trucks operate, the control handles must be of a sturdy construction. Such sturdy construction, together with the auxiliary control mechanisms, leads to a handle which has substantial weight. When the weight of the operator's hand is added to the weight of the control handle, conventionally supported control handles tend to be relatively easy to move downwardly due to the force of gravity. Prior art control handles include a variety of support arrangements to return the handles to neutral or center positions, oftentimes taking the form of spring biasing the handles so that when the handles are moved away from neutral positions springs are biased to return the handles to the center positions.

For control handles which are generally horizontally mounted, the conventional approach has been to increase the forces applied by springs biasing the handles to neutral positions. Unfortunately, such increased spring forces make it harder to move the handles upwardly as well as from side to side thus reducing the ease of moving the control handles and thereby reducing the ease of controlling trucks including the handles.

It is apparent that there is a need for an improved horizontally oriented control handle which can be moved in any direction with approximately the same force so that an operator of a truck including the handle can more easily and accurately control the handle and hence the truck including the handle.

### SUMMARY OF THE INVENTION

This need is met by the invention of the present application wherein a generally horizontally oriented control handle is mounted so that it is easier to move than prior art devices and wherein operator perceived forces required to move the control handle are substantially the same in any direction. The invention includes a ramp cam against which a spring loaded cam follower member operates. The shape and slope of the ramp cam surface provides additional resistance to downward movement of the control handle to compensate for the effects of gravity on the control handle. With the improved control handle support or mounting mechanism of the present invention, the operator perceives that the same amount of force is required to move the handle up, down, forward, or reverse; however, in reality, there are at least four different forces required.

The ramp cam provides a home or neutral position for the control handle, requiring the operator to exert a positive force to move the handle from its neutral position in any direction, but no so much as to cause the operator to over-control. Additional configurations of the ramp cam, taking the form or vertical and/or horizontal slots, aid in moving the handle selectively in a vertical and/or horizontal plane. Thus, the control handle may be moved forward and backward to cause the truck to travel in the forward and reverse direction without any tendency to raise or lower the forks inadvertently and/or, the control handle can be moved up and down to raise or lower the forks without any tendency to cause the truck to move. Of course, the control handle can be moved in any direction at the operator's election so that the truck can be made to move in either direction while simultaneously raising or lowering the forks.

It is an object of the present invention to provide an improved control device to which a control handle can be secured, for use for example in a fork lift truck, wherein the control handle is mounted generally horizontally and can be moved in any direction using a perceived forced which is substantially the same regardless of the direction the handle is moved; to provide an improved control device for supporting a generally horizontally mounted control handle wherein a ramp cam is configured to counteract the force of gravity which normally makes movement of the handle in a downward direction require less force than movement of the handle in other directions; to provide an improved control device for supporting a generally horizontally mounted control handle wherein a ramp cam is configured to counteract the force of gravity which assists downward movement of the handle and is divided into quadrants to facilitate movement of the handle in a vertical and/or horizontal plane.

Other objects and advantages of the invention will be apparent from the following description, the accompanying drawings and the appended claims.

### BRIEF DESCRIPTION OF THE DRAWINGS

Fig. 1 is perspective view of a rider reach fork lift truck which includes a control handle supported by a control device in accordance with the present invention;
Fig. 2 is side view of a fork lift truck;
Fig. 3 is a plan view of a fork lift truck showing an operator's compartment including a control handle and a steering tiller;
Fig. 4 is a perspective view of an operator's compartment of a fork lift truck;
Fig. 5 is a perspective view of a control handle supported by the control device of the present invention, the control handle extends into the operator's compartment and is positioned to be received by the operator's right hand;
Fig. 6 is perspective view showing the control handle of Figs. 1-5 attached to the control device of the present invention;
Fig. 7 is front perspective view of the control device of the present invention;
Fig. 8 is rear perspective view of the control device of Fig. 7;
Fig. 9 is front elevational view of the control device of Fig. 8;
Fig. 10 is cross sectional view taken along section line 10-10 of Fig. 9 showing the bottom half of the control mechanism of Fig. 9;
Fig. 11 is cross sectional view taken along section line 11-11 of Fig. 9 showing the left half of the control mechanism of Fig. 9;
Fig.12 is a top view of the control device of Fig. 9 positioned as it would be if an attached control handle was moved to the full forward position, with a ramp cam and spring shown in cross section;
Fig. 13 is side view of the control device of Fig. 9 positioned as it would be if an attached handle was moved to the full lowered position, with the ramp cam and spring shown in cross section;
Fig. 14 is a plan view of the ramp cam;
Figs. 15-20 are cross sectional views of the ramp cam of Fig. 14 taken along lines 15 through 20 of Fig. 14;
Figs. 21-26 are cross sectional views of the ramp cam of Fig. 14 taken along lines 21 through 26 of Fig. 14;
Figs. 27 and 28 are perspective views of the ramp cam or bearing surface;
Fig. 29 is a front perspective view of a support member of the control device showing a motion limiter plate;
Fig. 30 is front view of a support member of the control device showing the limiter plate; and
Fig. 31 is a perspective view of the control device showing a shaft position sensing mechanism attached thereto.

### DETAILED DESCRIPTION OF THE INVENTION

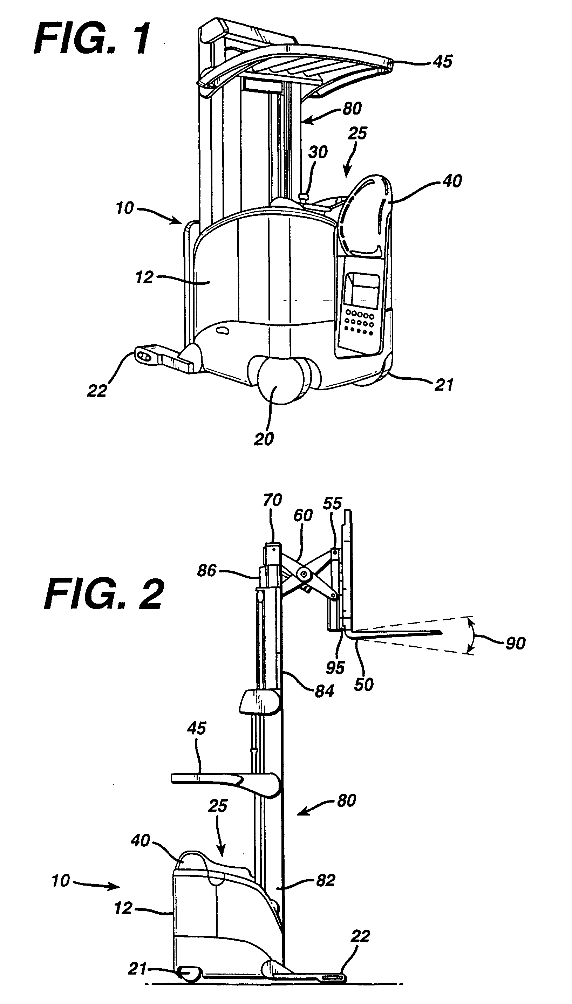

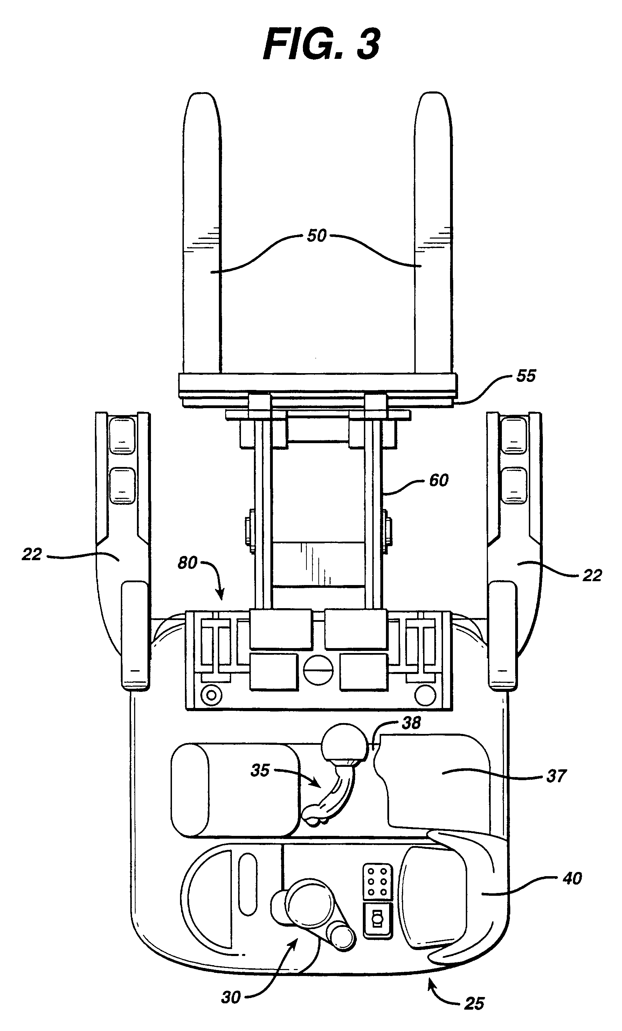

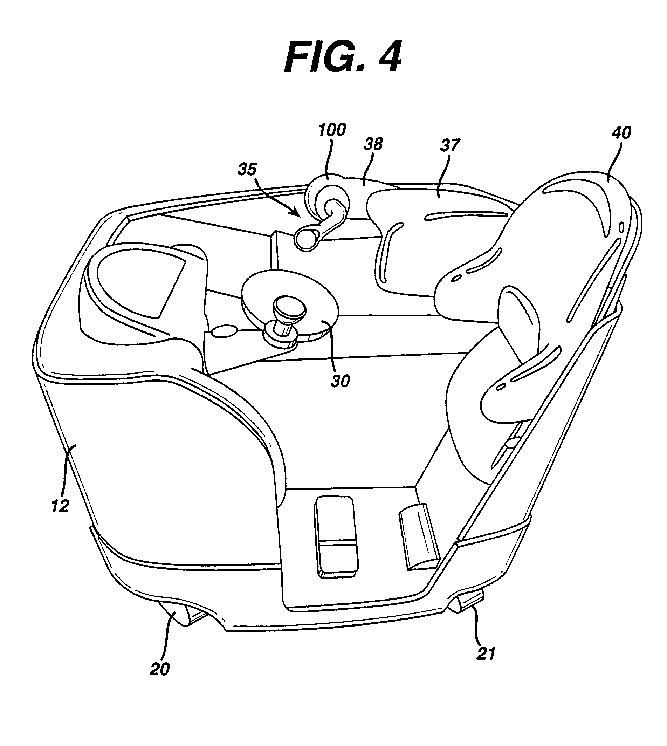

Reference is now made to the drawings which illustrate a preferred embodiment of the invention of the present application, and particularly to Figs. 1 to 4 which show a rider reach fork lift truck 10 that includes a power unit 12 which houses a battery (not shown) for supplying power to a traction motor (not shown) connected to steerable a wheel 20 and to hydraulic motors (not shown) which supply power to several different systems. A caster wheel 21 is mounted at the right rear of the truck 10 while a pair of outriggers 22 are mounted at the forward part of the truck 10.

An operator's compartment 25 in the power unit 12 is provided with a steering tiller 30 for controlling the direction of travel of the truck 10, and a control handle 35 for controlling travel speed and direction (front/rear) as well as fork height, extension, tilt and side shift. An arm rest 37 supports the operator's right arm and includes an extension or arm 38 onto which a control device 100 of the present invention is mounted and which receives the control handle 35. A back rest or seat 40 supports the operator in the compartment 25. An overhead guard 45 is positioned above the operator's compartment 25.

A pair of forks 50 are mounted on a fork carriage mechanism 55 which is in turn mounted on a reach mechanism 60 on a vertical carriage assembly 70. As described in U. S. Patent 5,586,620, which is incorporated herein by reference, the assembly 70 is attached to an extensible mast assembly 80, which includes a fixed, lower mast member 82 and nested movable mast members 84 and 86.

A hydraulic cylinder (not shown) is operated by control handle 35 to control the height of the forks 50 which are shown raised in Fig. 2. The forks 50 may be tilted through a range shown by the arrow 90 by means of a hydraulic cylinder 95 located between the forks 50 and the fork carriage mechanism 55. The forks may also be moved from side to side by a side shift mechanism (not shown).

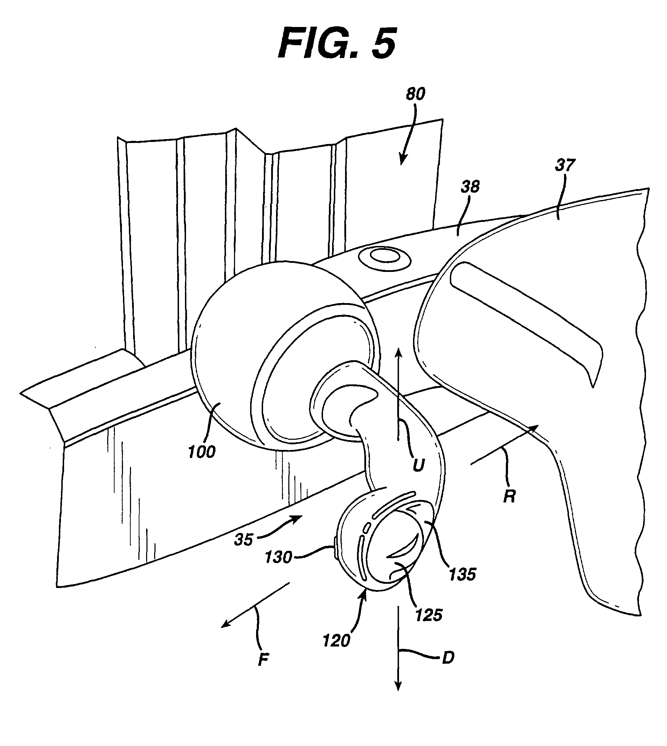

Referring to Fig. 5, the control handle 35 is mounted on the control device 100. Movement of the truck 10 in the forward and reverse directions is accomplished by the operator pushing the handle 35 forward or pulling it back, respectively. Thus, if the handle 35 is pushed forward in the direction of arrow F, the truck 10 will move forward; if the handle is moved rearward in the direction of arrow R, the truck 10 will move in the reverse direction. Similarly, raising and lowering the forks is accomplished by moving the handle up in the direction of arrow U and down in the direction of arrow D.

Other functions of the truck 10 are controlled by an auxiliary switch mechanism 120 located at the end of the handle 35 which switch mechanism 120 may be operated by the fingers and thumbs of the operator. As shown in Fig. 5, the auxiliary switch mechanism 120 includes a thumb operated knob switch 125 which, when moved in upwardly causes the forks 50 to tilt upward, and when moved in the opposite direction causes the forks 50 to tilt downward. When the switch 125 is moved in the direction of arrow F, the forks 50 will be moved (or reach) outwardly, away from the mast, and when moved in the direction R, the forks 50 will be moved inwardly or retracted toward the mast. A side shift selection switch 130, when depressed by the finger of the operator, changes the function of the switch so that movement of the knob 125 in the direction of arrows F and R will cause the forks to move from side to side, to the left and right, respectively. A horn button 135 is placed on the handle 35 to be actuated by the operator's thumb.

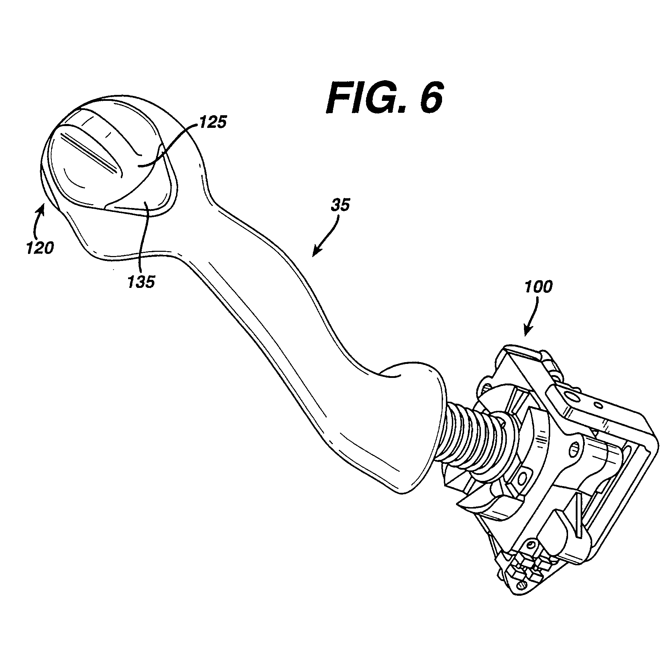

The control device 100, shown in Figs. 6-13 and 31, includes a shaft 150 mounted for pivotal movement in a support member 170. The shaft 150 includes a first or outward end 152 which extends into the control handle, an inward end 153 that controls shaft position sensors, a retaining slot 154 for securing the control handle 35 to the shaft 150, and a spherical section 160.

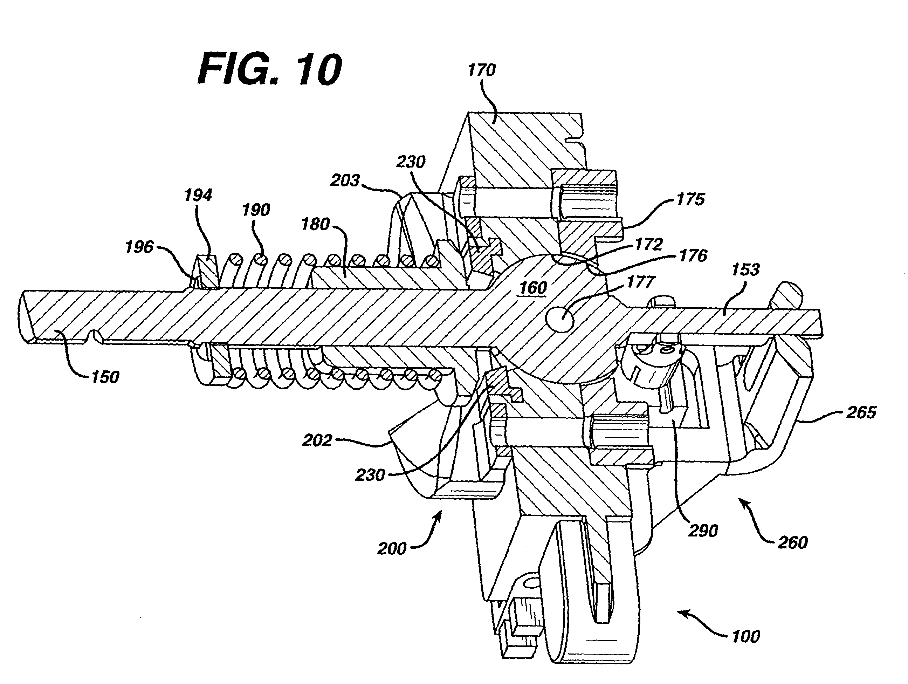

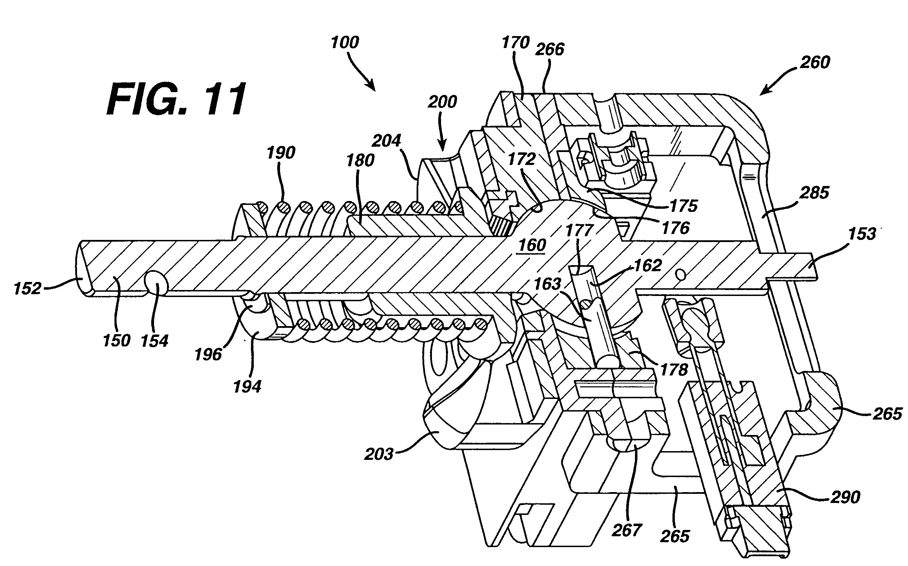

The support member 170 is provided with a socket 172 for receiving the spherical section 160 of the shaft, thereby forming a ball and socket pivot or hinge assembly, see Figs. 10 and 11. A retaining plate 175, also provided with a socket 176, captures the spherical section 160 of the shaft 150 and holds it in place while allowing the shaft 150 to rotate about a center 177 of the spherical section 160.

Rotation of the shaft 150 about its own longitudinal axis is prevented by a pin 163 that extends in the horizontal plane into an opening 162 formed along an axis of rotation of the spherical section 160; the outer end of the pin 162 extends into a slot 178 formed in the support member 170 which allows for rotation in a vertical plane, see Fig. 11.

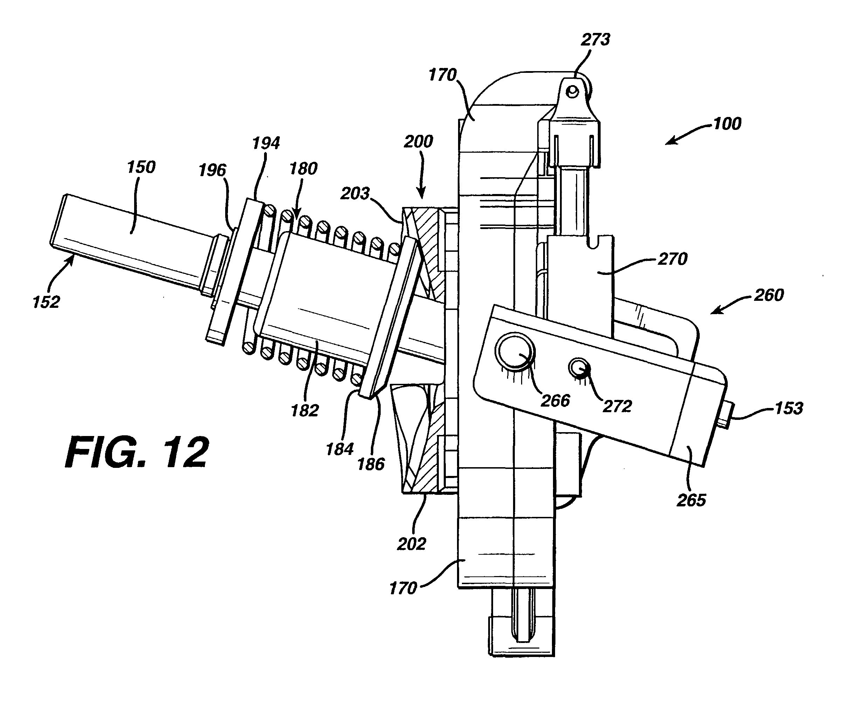

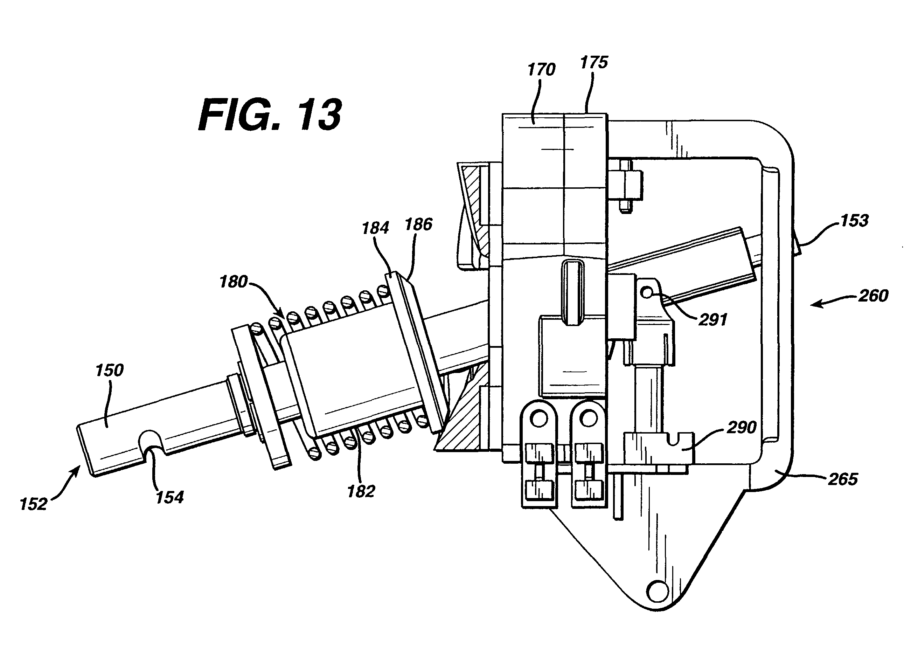

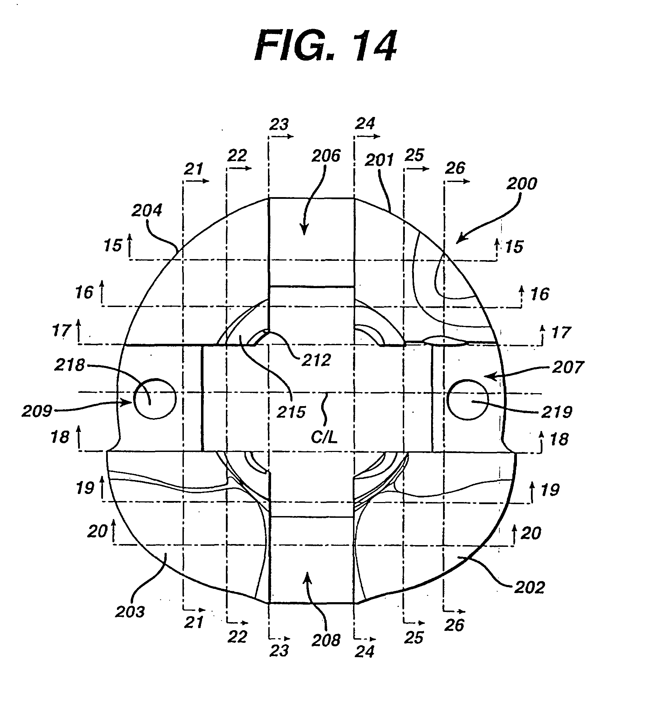

Free movement of the shaft 150 about the center 177 of the spherical section 160 of the shaft 150 is opposed by a spring biasing mechanism or cam follower that includes a slider 180 which is mounted coaxially with and surrounds the shaft 150, a spring 190, a spring retainer taking the form of a washer 194 in the illustrated embodiment, and a ramp cam 200. The slider 180 includes a cylindrical body 182 provided with a flange 184 at the end facing the cam 200. A frusto-conical cam contacting or bearing surface 186 is formed on the outside of the flange 184 and engages the ramp cam 200, see Figs. 12 and 13. The spring 190 is compressed between the flange 184 of the slider 180 and the washer 194 or retainer which is held in place by a snap ring 196 that fits into a slot on the shaft 150. To counteract the force of gravity on the control handle 35, the ramp cam 200 has a general first slope below a centerline C/L and a general second slope above the centerline C/L with the second slope being less than the first slope, see Fig. 14.

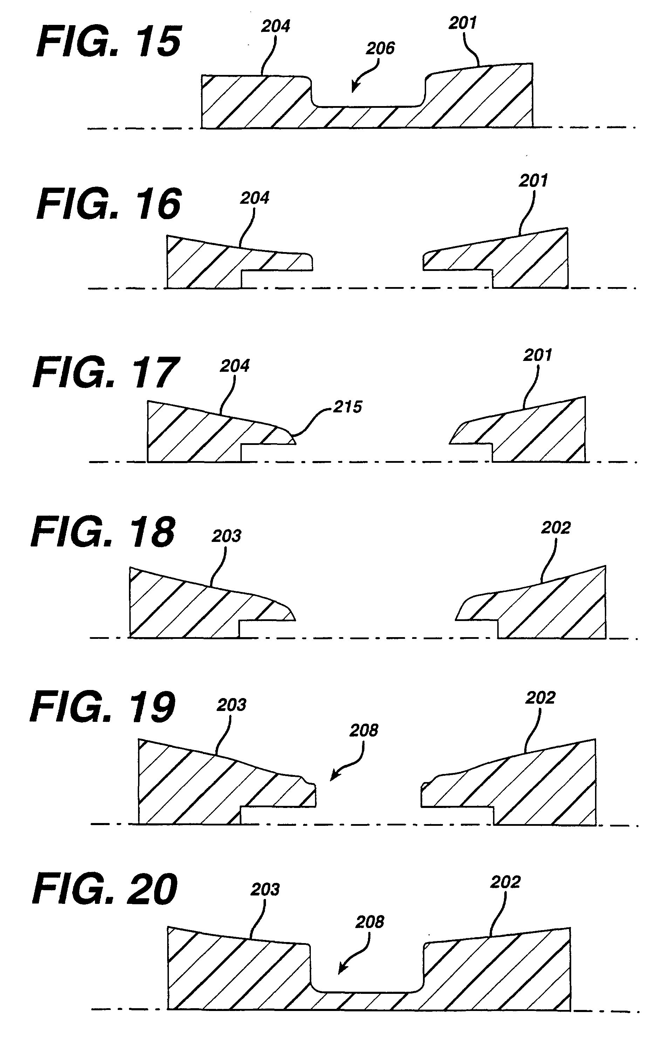

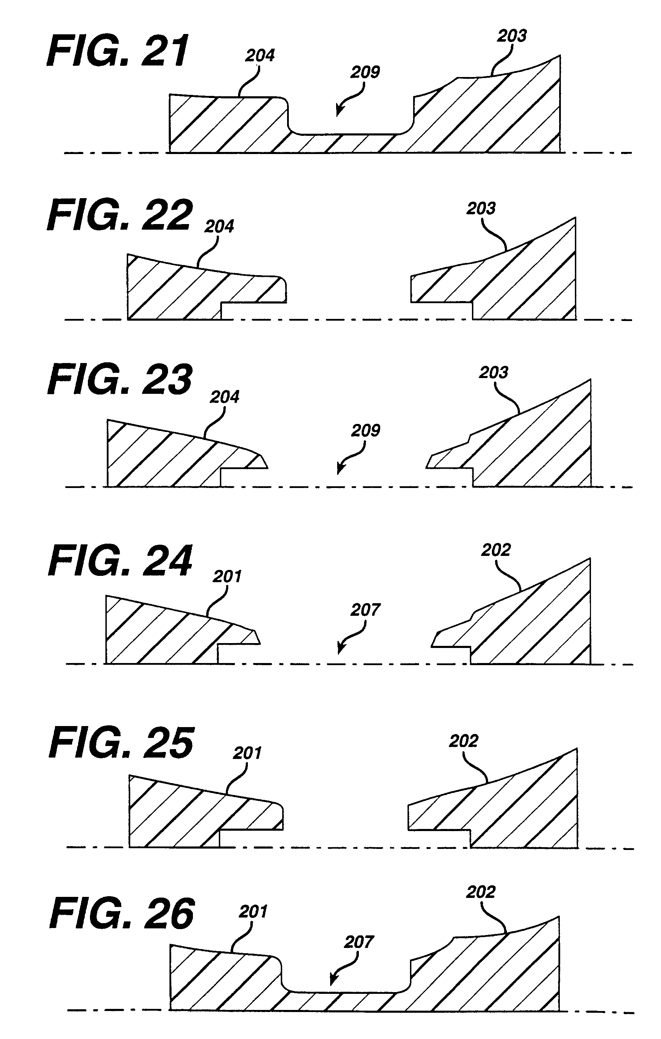

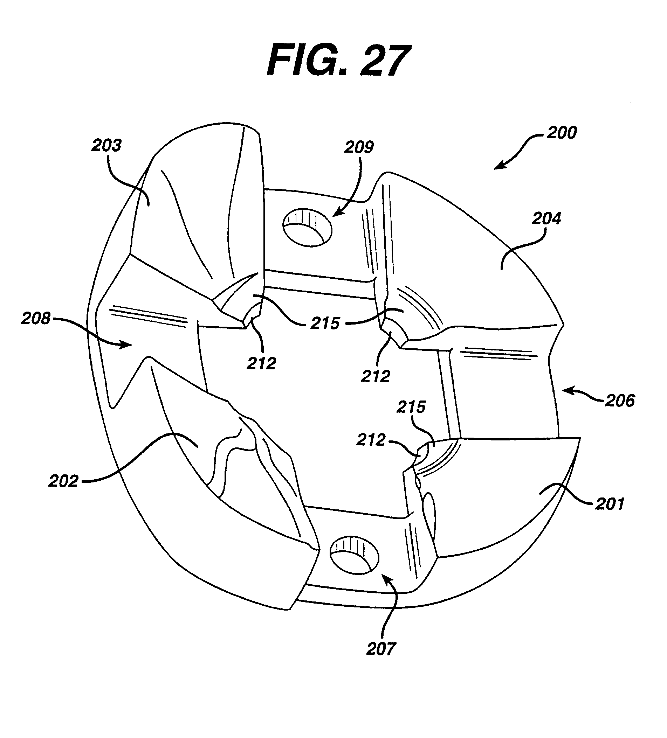

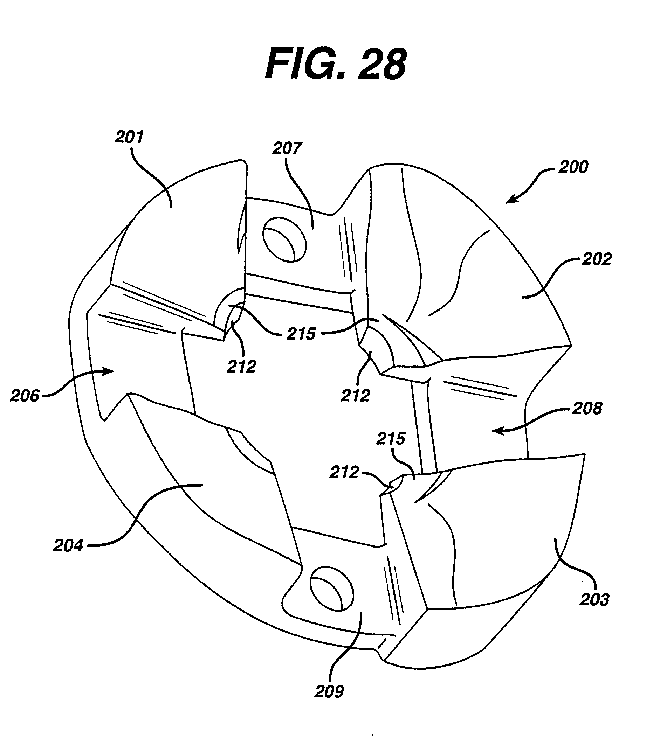

While the ramp cam 200 can be formed on the support member 170, as illustrated, it is separately formed and then attached to the support member 170. In the illustrated embodiment, the ramp cam 200, shown in detail in the Fig. 14 - 28, includes four specially shaped bearing surfaces 201-204 or ramps. Four slots 206-209, formed in the ramp cam 200, separate the bearing surfaces from one another. Thus, the slot 206 is located between the bearing surfaces 201 and 204, the slot 207 is located between the bearing surfaces 201 and 202, the slot 208 is located between the bearing surfaces 202 and 203, and the slot 209 is located between the bearing surfaces 203 and 204. The four slots 206, 209 can be envisioned as comprising a horizontal slot made up of the slots 207, 209 and a vertical slot made up of the slots 206, 208. Each of the bearing surfaces 201-204 of the ramp cam 200 includes a relieved area 212 which accommodates the shaft 150 when the shaft 150 is moved to its limit position in any direction.

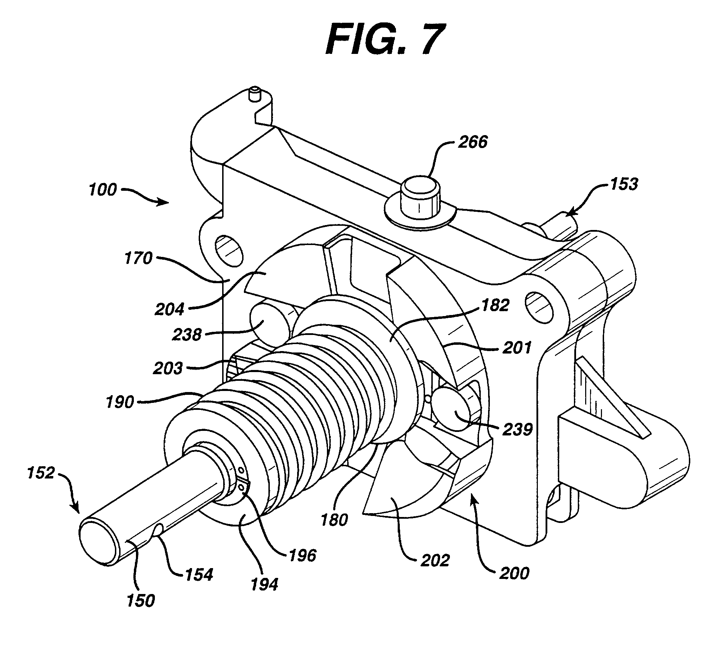

Each bearing surface, or ramp, includes two different ramp configurations on which the bearing surface 186 of the slider 180 rides. The first ramp configuration defines a third slope which provides a centering function and requires the operator to exert a positive force to move the shaft 150 from its neutral or center position as shown in Figs. 7-11. In other words, the first ramp configuration provides a detent. In Figs. 14-28, the first ramp configuration is shown as a ramp 215. The diameter of the outer edges of the ramps 215 correspond generally to the diameter of the flange 184. The complex shape of the ramp cam 200 as illustrated in Figs. 14-28 is empirically determined to provide the desired feel when an operator uses the control handle 35.

Each bearing surface also includes a second ramp configuration which is tailored to specific needs. Thus, the second ramp configuration of the two lower ramps 202 and 203 located below the centerline C/L has a first slope which is greater than a second slope of the second ramp configuration of the two upper ramps 201, 204. For this configuration, more force must be exerted against the control handle 35 by the operator when moving the control handle 35 down than when moving the control handle 35 up, although the forces are perceived by the operator to be approximately equal. Also, the slopes of the second ramps vary from front to rear. Further, the overall topography of each of the second ramps is unique and varies across its surface in order to accomplish the desired purpose of providing the operator with a feel or perception that equal effort is required to move the handle 35, once it has been moved from its center position. The slopes of the surfaces at various locations on the ramp cam 200 are shown in Figs. 14-28.

The handle 35 can be moved forward and backward in a horizontal plane aligned with the slots 207, 209 to cause the truck 10 to travel in the froward and reverse directions, respectively, without any tendency to raise or lower the forks 50 inadvertently. Similarly, the handle 35 can be moved up and down in a vertical plane aligned with the slots 206, 208 to cause the forks to raise or lower, respectively, without any tendency to cause the truck 10 to move. Of course, the control handle 35 can be moved in any direction at the operator's election so that the truck 10 can be made to move in either direction while simultaneously raising or lowering the forks 50. This stability of movement in either a horizontal plane or a vertical plane is provide by having two points of the frusto-conical cam contacting or bearing surface 186 formed on the outside of the flange 184 of the slider 180 make contact with the slots 206-209 during such movement. Thus, the bearing surface 186 makes two point contact with the slots 207, 209 for horizontal movement of the control handle 35 and the bearing surface 186 makes two point contact with the slots 206, 208 for vertical movement of the control handle 35. For movements in other than the horizontal and vertical planes defined by the slots 206-209, the bearing surface 186 makes only one point contact.

The shaft 150 extends through a limiter plate 230, shown in Figs. 10, 11, 29 and 30. The opening 231 in the limiter plate is curved to define the limits of movement of the shaft 150 when the handle 35 is moved to its extreme positions. In particular, the limiter plate is 230 curved to guide the handle 35 in a non-linear path whenever the handle is pushed or pulled to its limit in either the forward or reverse direction and then moved up or down to raise or lower the forks. The reason for this configuration is to assure linear actuation of the shaft position sensing devices 260, which will be described later.

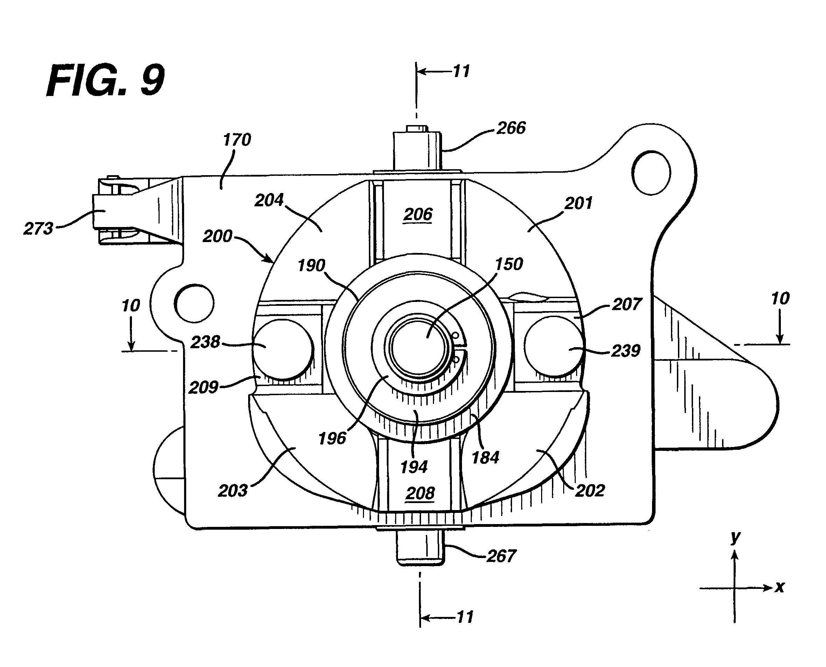

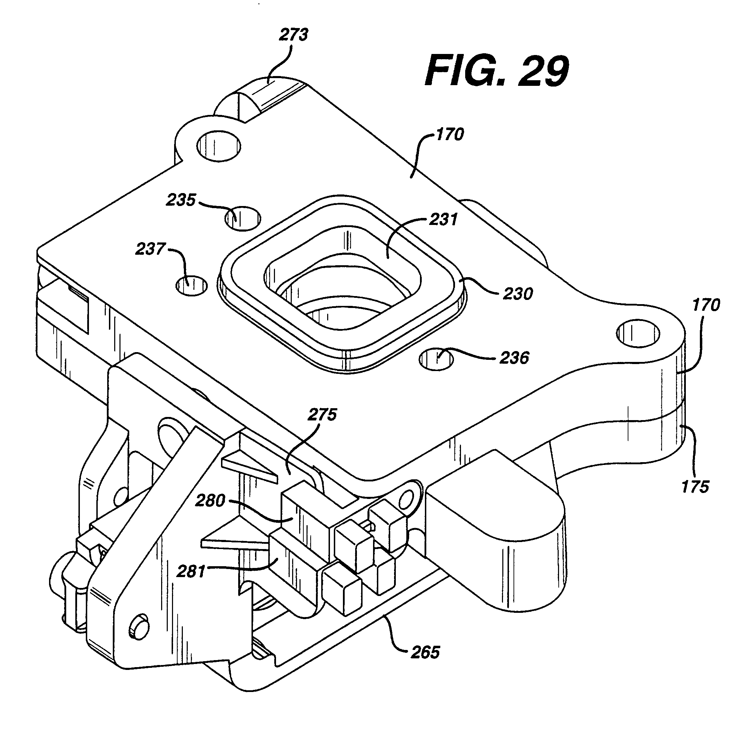

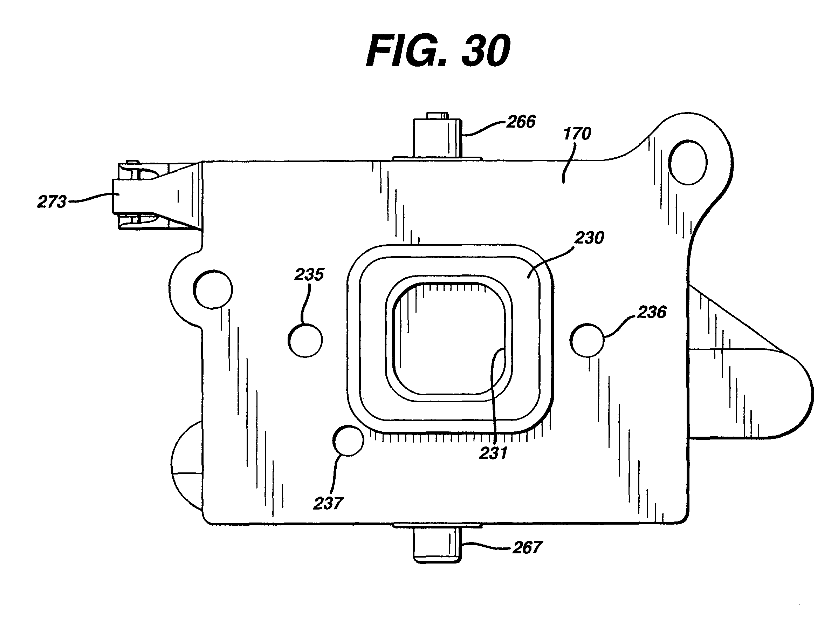

Also shown in Figs. 29 and 30 are two openings 235, 236 which receive fasteners 238 and 239, shown in Fig. 9, that extend through openings 218 and 219 in the ramp cam 200 for attaching the ramp cam 200 to the support member 170. A third opening 237 receives an alignment pin (not shown) which protrudes from the back surface of the ramp cam 200, thus assuring that the ramp cam 200 will be properly aligned when attached during assembly.

The X, Y or horizontal and vertical position of the shaft 150, or the handle 35, is converted into an electrical signal by a shaft position sensing device 260. In this invention, the device 260 includes two linear potentiometers 270 and 290 to provide horizontal and vertical position signals, respectively, see Figs. 12 and 13.

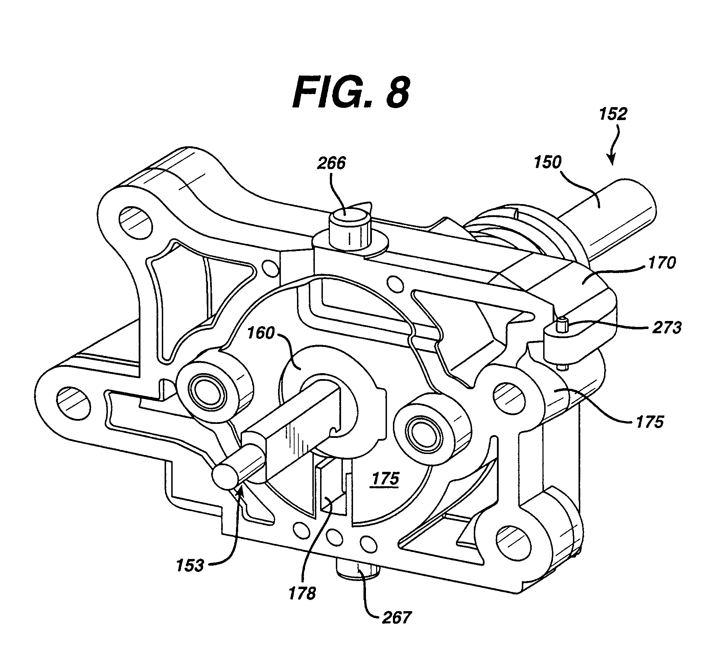

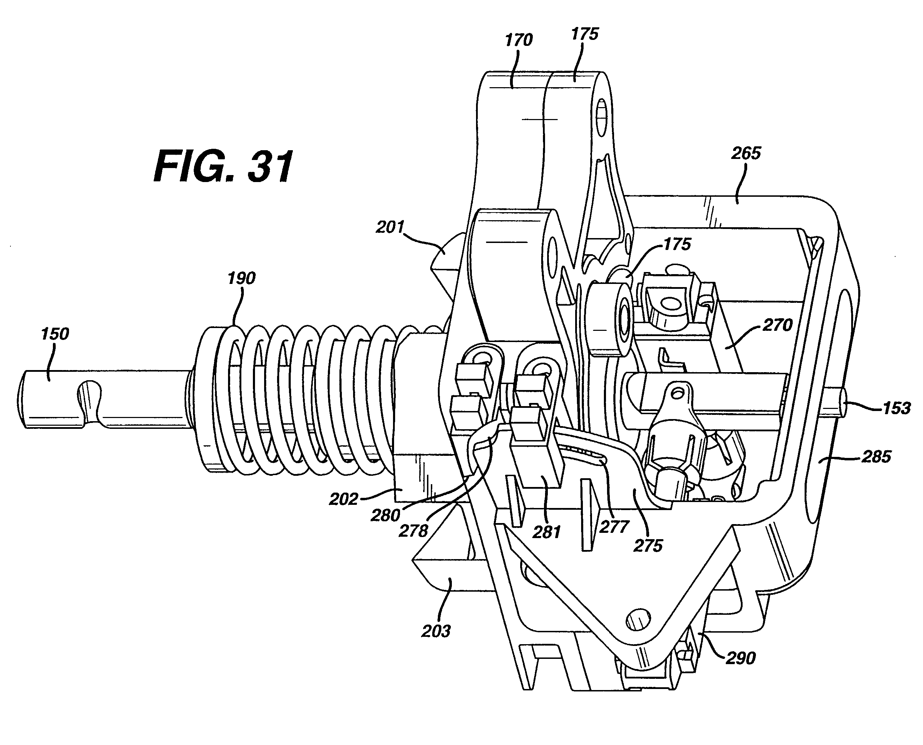

The position sensing device 260 includes a bracket 265 which is pivotally attached by pins 266 and 267 that extend from the top and bottom of support member 170. As the control handle 35 is moved in the horizontal direction, the bracket 265 will rotate about the pivot points defined by the pins 266 and 267, as shown in Figs. 8, 9 and 12. A linear potentiometer 270 has one end connected to the bracket 265 at 272 and its other end attached to the support member 170 at 273. Thus, the position of the shaft 150, and the control handle 35, is determined by the output of the linear potentiometer 270. The bracket 265 also carries a bracket 275 which includes a pair of slots 277, 278, see Fig. 31. The slots 277, 278 pass over optical sensors 280 and 281 to provide an indication separate from the linear potentiometer 270 and indicate when the shaft 150, and hence the handle 35, is in its neutral position.

The end 153 of the shaft 150 extends through a slot 285 in the bracket 265 which allows the shaft 150 to move vertically with respect to the bracket 265. A second linear potentiometer 290 is attached to the shaft 150 at one end 291 and to the bracket 265 at the other end to provide an output proportional to the location of the shaft 150.

While the form of apparatus herein described constitutes a preferred embodiment of this invention, it is to be understood that the invention is not limited to this precise form of apparatus and that changes may be made therein without departing from the scope of the invention, which is defined in the appended claims.

## Claims

1. A control device (100) for supporting a control handle (35) in a generally horizontal orientation, said control device comprising:
a support member (170);
a ramp cam (200) on said support member;
a shaft (150) for receiving said control handle and being pivotally mounted in said support member for free but limited movement;
a slider (180) mounted coaxially with said shaft, said slider including a flange (184) and a frusto-conical bearing surface (186);
a retainer (194) on said shaft; and
a spring (190) surrounding said shaft and extending between said flange and said retainer for urging said frusto-conical bearing surface into contact with said ramp cam;
said ramp cam (200) defining a bearing surface which is contoured to provide an operator using said control handle with the perception that equal effort is required to move said handle in any direction.

2. A control device (100) as claimed in claim 1 wherein ramp cam (200) is mounted on said support member (170).

3. A control device (100) as claimed in claim 1 wherein said ramp cam (200) is configured to have a first slope below a centerline (C/L) thereof and a second slope less than said first slope above said centerline.

4. A control device (100) as claimed in claim 3 wherein said ramp cam (200) defines a third slope for defining a neutral, center position for said shaft (150).

5. A control device (100) as claimed in claim 1 wherein said ramp cam (200) is divided into four quadrants forming four bearing surfaces (201 - 204) defined by a horizontal slot (207, 209) and a vertical slot (206, 208) formed into said ramp cam, said horizontal slot and said vertical slot being generally centered on said ramp cam to define a favored back and forth path (F, R) for movement of said shaft in a horizontal plane and a favored up and down path (U, D) for said shaft in a vertical plane, respectively.

6. A control device (100) as claimed in claim 5 wherein said ramp cam (200) has a greater slope in two lower quadrants (202, 203) of said four quadrants (201, 204) to compensate for the effects of gravity on said handle (35) and said operator's hand.

7. A control device (100) as claimed in claim 1 wherein said ramp cam (200) has two distinct slope configurations, a first one of said two distinct slope configurations (215) determining when said handle is in a center position and requiring a greater force to overcome than when said handle (35) has been moved from said center position.

8. A control device (100) as claimed in claim 7 wherein a second one of said two distinct slope configurations is divided by a centerline (C/L) of said ramp cam (200) and comprises a first slope below said centerline and a second slope less than said first slope above said centerline.

9. A control device (100) for supporting a control handle (35) in a generally horizontal orientation, said control device comprising:
a support member (170);
a shaft (150) mounted for pivotal movement in said support member, said shaft having a first end (152) extending generally horizontally out a first side of said support member for receiving said handle;
a generally vertically orientated annular ramp cam (200) on said support member, said first end of said shaft extending through said annular ramp cam;
a cam follower (180, 182, 184, 186, 190, 194) associated with said first end of said shaft and being spring biased into engagement with said ramp cam, said ramp cam defining a bearing surface contoured to provide an operator using a handle coupled to said control device with the perception that equal effort is required to move said handle in either direction in the horizontal plane or in either direction in the vertical plane.

10. A control device (100) as claimed in claim 9 wherein said ramp cam (200) is mounted on said support member (170).

11. A control device (100) as claimed in claim 9 wherein said cam follower (180, 182, 184, 186, 190, 194) comprises:
a slider (180) surrounding said shaft (150) and having a flange (184) defining a frusto-conical ramp cam contacting surface (186); and
a spring (190) supported by and surrounding said shaft for forcing said ramp cam contacting surface into contact with said ramp cam.

12. A control device (100) as claimed in claim 9 wherein said ramp cam (200) bearing surface is configured to have a first slope below a centerline (C/L) thereof and a second slope less than said first slope above said centerline.

13. A control device (100) as claimed in claim 12 wherein said ramp cam (200) defines a third slope for defining a neutral, center position for said shaft (150).

14. A control device (100) as claimed in claim 9 wherein said ramp cam (200) is divided into four bearing surfaces (201 - 204) defined by a horizontal slot (207, 209) and a vertical slot (206, 208) formed into said ramp cam, said horizontal slot and said vertical slot being generally centered on said ramp cam to define a favored back and forth path (F, R) for said shaft (150) and a favored up and down path (U, D) for said ramp cam, respectively.

15. A control device (100) as claimed in claim 14 wherein said four bearing surfaces (201 - 204) of said ramp cam (200) define a third slope (215) for defining a neutral, center position for said shaft.

## Patentansprüche

1. Steuervorrichtung (100) zum Stützen eines Steuergriffs (35) in im wesentlichen horizontaler Richtung, wobei die Steuervorrichtung umfaßt:
- ein Stützglied (170);
- ein Schrägnockenglied (200) auf dem Stützglied;
- einen Schaft (150), der schwenkbar zu freier, aber begrenzter Bewegung im Stützglied befestigt ist;
- ein Gleitstück (180), das koaxial zu dem Schaft angebracht ist, wobei das Gleitstück einen Flansch (184) und eine kegelstumpfförmige Anlagefläche (186) umfaßt;
- eine Halteplatte (194) am erwähnten Schaft; und
- eine Feder (190), die den Schaft umgibt und sich zwischen dem Flansch und der Halteplatte erstreckt, um die kegelstumpfförmige Anlagefläche in Kontakt mit dem Schrägnockenglied zu halten;
- wobei das Schrägnockenglied (200) eine Anlagefläche definiert, die so profiliert ist, daß sie einer Person, die den Steuergriff benutzt, den Eindruck vermittelt, daß zur Bewegung des genannten Griffs in beliebiger Richtung ein gleichbleibender Kraftaufwand erforderlich ist.

2. Steuervorrichtung (100) nach Anspruch 1, worin das Schrägnockenglied (200) auf dem Stützglied (170) angebracht ist.

3. Steuervorrichtung (100) nach Anspruch 1, worin das Schrägnockenglied (200) so gestaltet ist, daß es unterhalb einer Mittellinie (C/L), die es aufweist, eine erste Steigung und oberhalb der genannten Mittellinie eine zweite Steigung besitzt, die geringer als die erste Steigung ist.

4. Steuervorrichtung (100) nach Anspruch 3, worin das Schrägnockenglied (200) eine dritte Steigung definiert, um eine neutrale Mittelposition für den Schaft (150) zu definieren.

5. Steuervorrichtung (100) nach Anspruch 1, worin das Schrägnockenglied (200) in vier Quadranten geteilt ist, die vier Auflageflächen (201 - 204) bilden, die von einer im Schrägnockenglied ausgebildeten horizontalen Vertiefung (207, 209) und einer solchen vertikalen Vertiefung (206, 208) begrenzt werden, wobei die horizontale Vertiefung und die vertikale Vertiefung im wesentlichen mittig auf dem Schrägnockenglied ausgerichtet sind, wobei sie eine bevorzugte Bewegungsrichtung vorwärts-rückwärts (F, R) zum Bewegen des Schafts in einer horizontalen Ebene bzw. eine bevorzugte Richtung aufwärts-abwärts (U, D) für den Schaft in einer vertikalen Ebene definieren.

6. Steuervorrichtung (100) nach Anspruch 5, worin das Schrägnockenglied (200) in zwei unteren Quadranten (202, 203) der vier Quadranten (201, 204) eine größere Steigung aufweist, um die Schwerkraftwirkung auf den Handgriff (35) und die Hand des Benutzers zu kompensieren.

7. Steuervorrichtung (100) nach Anspruch 1, worin das Schrägnockenglied (200) zwei unterschiedliche Steigungskonfigurationen besitzt, wobei eine erste dieser unterschiedlichen Steigungskonfigurationen (215) festlegt, wann sich der Handgriff in Mittelposition befindet und eine größere Kraft zu überwinden ist, als wenn der Handgriff (35) aus dieser Mittelposition wegebewegt wurde.

8. Steuervorrichtung (100) nach Anspruch 7, worin eine zweite der genannten beiden unterschiedlichen Steigungskonfigurationen durch eine Mittellinie (C/L) des Schrägnockenglieds (200) unterteilt ist und eine erste Steigung unterhalb dieser Mittellinie sowie eine zweite Steigung, die geringer ist als die erste Steigung, oberhalb dieser Mittellinie umfaßt.

9. Steuervorrichtung (100) zum Stützen eines Steuergriffs (35) in einer im wesentlichen horizontalen Richtung, wobei die Steuervorrichtung umfaßt:
- ein Stützglied (170);
- einen Schaft (150), der in diesem Stützglied zum schwenkbaren Bewegen befestigt ist, wobei der Schaft ein erstes Ende (152) aufweist, das sich im wesentlichen horizontal aus einer ersten Seite des für die Aufnahme des genannten Handgriffs vorgesehenen Gehäuses erstreckt;
- ein im wesentlichen vertikal ausgerichtetes, ringförmiges Schrägnockenglied (200) auf dem genannten Stützglied, wobei sich das erste Ende des Schafts durch dieses ringförmige Schrägnockenglied erstreckt;
- ein Nockenstößel (180, 182, 184, 186, 190, 194), der dem ersten Ende des Schaftes zugeordnet ist und durch Federspannung mit dem Schrägnockenglied in Eingriff steht, wobei das Schrägnockenglied eine Auflagefläche bildet, die so profiliert ist, daß sie einer Person, die einen mit der Steuervorrichtung verbundenen Handgriff benutzt, den Eindruck vermittelt, daß es des gleichen Kraftaufwands bedarf, um diesen Handgriff in beliebiger Richtung in horizontaler Ebene oder in beliebiger Richtung in vertikaler Ebene zu bewegen.

10. Steuervorrichtung (100) nach Anspruch 9, worin das Schrägnockenglied (200) auf dem Stützglied (170) befestigt ist.

11. Steuervorrichtung (100) nach Anspruch 9, worin der Nockenstößel (180, 182, 184, 186, 190, 194) umfaßt:
- ein Gleitstück (180), das den Schaft (150) umgibt und einen Flansch (184) aufweist, der eine kegelstumpfförmige Kontaktfläche (186) für das Schrägnockenglied definiert; und
- eine Feder (190), die durch den genannten Schaft gestützt wird und ihn umgibt und dazu dienen soll, daß die Kontaktfläche für das Schrägnockenglied in Kontakt mit dem Schrägnockenglied gezwungen wird.

12. Steuervorrichtung (100) nach Anspruch 9, worin die Anlagefläche des Schrägnockenglieds (200) so ausgestaltet ist, daß sie eine erste Steigung unterhalb einer Mittellinie (C/L), die sie aufweist, besitzt, und eine zweite Steigung oberhalb dieser Mittellinie besitzt, die geringer als die erste Steigung ist.

13. Steuervorrichtung (100) nach Anspruch 12, worin das Schrägnockenglied (200) eine dritte Steigung für eine neutrale Mittelposition für den Schaft (150) definiert.

14. Steuervorrichtung (100) nach Anspruch 9, worin das Schrägnockenglied (200) in vier Auflageflächen (201 - 204) geteilt ist, die durch eine im Schrägnockenglied ausgebildete horizontale Vertiefung (207, 209) sowie eine solche vertikale Vertiefung (206, 208) definiert sind, wobei die horizontale Vertiefung und die vertikale Vertiefung im wesentlichen mittig auf dem Schrägnockenglied ausgerichtet sind, um eine bevorzugte Bewegungsrichtung vorwärts-rückwärts (F, R) für den Schaft (150) bzw. eine bevorzugte Bewegungsrichtung aufwärts-abwärts (U, D) für das Schrägnockenglied zu definieren.

15. Steuervorrichtung (100) nach Anspruch 14, worin die vier Auflageflächen (201 - 204) des Schrägnockengliedes (200) eine dritte Steigung (215) definieren, durch die eine neutrale Mittelposition für den Schaft festgelegt wird.

## Revendications

1. Dispositif de contrôle (100) pour supporter une poignée de contrôle (35) dans une orientation générale horizontale, ledit dispositif de contrôle comprenant :
un élément de soutien (170) ;
une came d'appui (200) sur ledit élément de soutien ;
un arbre (150) monté de manière pivotante dans ledit élément de soutien pour avoir un mouvement libre mais limité ;
un élément coulissant (180) monté coaxialement audit arbre, ledit élément coulissant comprenant un flasque (184) et une surface de glissement frusto-conique (186) ;
un rétenteur (194) sur ledit arbre ; et
un ressort (190) entourant ledit arbre et s'étendant entre ledit flasque et ledit rétenteur pour forcer ladite surface de glissement frusto-conique à venir en contact avec ladite came d'appui ;
ladite came d'appui (200) définissant une surface de glissement dont le contour est prévu pour offrir à un opérateur utilisant ladite poignée de contrôle la perception qu'un effort égal est nécessaire pour bouger ladite poignée dans toutes les directions.

2. Dispositif de contrôle (100) selon la revendication 1 dans lequel la came d'appui (200) est montée sur ledit élément de soutien (170).

3. Dispositif de contrôle (100) selon la revendication 1 dans lequel ladite came d'appui (200) est configurée pour avoir une première pente au-dessous de son axe central (C/L) et une seconde pente inférieure à ladite première pente au-dessus dudit axe central.

4. Dispositif de contrôle (100) selon la revendication 3 dans lequel ladite came d'appui (200) définit une troisième pente pour définir une position centrale, neutre, dudit arbre (150).

5. Dispositif de contrôle (100) selon la revendication 1 dans lequel ladite came d'appui (200) est divisée en quatre quadrants formant quatre surfaces de glissement (201 - 204) définies par une rainure horizontale (207, 209) et une rainure verticale (206, 208) formées dans ladite came d'appui, ladite fente horizontale et ladite fente verticale étant globalement centrées sur ladite came d'appui pour définir un chemin arrière et avant favorisé (F, R) pour le mouvement dudit arbre dans un plan horizontal et un chemin haut et bas favorisé (U, D) pour ledit arbre dans un plan vertical, respectivement.

6. Dispositif de contrôle (100) selon la revendication 5 dans lequel ladite came d'appui (200) présente une pente supérieure dans les deux quadrants inférieurs (202, 203) desdits quatre quadrants (201, 204) pour compenser les effets de la gravité sur ladite poignée (35) et la main dudit opérateur.

7. Dispositif de contrôle (100) selon la revendication 1 dans lequel ladite came d'appui (200) a deux configurations distinctes de pente, la première desdites deux configurations (215) déterminant quand ladite poignée est en position centrale et requérant une plus grande force pour la dépasser que lorsque ladite poignée (35) a été déplacée de la position centrale.

8. Dispositif de contrôle (100) selon la revendication 7 dans lequel la seconde desdites deux configurations distinctes de pente est divisée par l'axe central (C/L) de ladite came d'appui (200) et comprend une première pente au-dessous dudit axe central et une seconde pente inférieure à ladite première pente au-dessus dudit axe central.

9. Dispositif de contrôle (100) pour supporter une poignée de contrôle (35) dans une orientation générale horizontale, ledit dispositif de contrôle comprenant :
un élément de soutien (170) ;
un arbre (150) monté pour pivoter dans ledit élément de soutien, ledit arbre ayant une première extrémité (152) s'étendant globalement horizontalement hors d'un premier coté dudit logement pour recevoir ladite poignée ;
une came d'appui annulaire globalement orientée verticalement (200) sur ledit élément de soutien, ladite première extrémité dudit arbre s'étendant au travers de ladite came d'appui annulaire ;
un poussoir de came (180, 182, 184, 186, 190, 194) associé à ladite première extrémité dudit arbre et étant poussé par le ressort afin de rester en contact avec ladite came d'appui, ladite came d'appui définissant une surface de glissement dont le contour est prévu pour offrir à un opérateur utilisant une poignée couplée audit dispositif de contrôle la perception qu'un effort égal est nécessaire pour bouger ladite poignée dans les deux directions dans le plan horizontal ou dans les deux directions dans le plan vertical.

10. Dispositif de contrôle (100) selon la revendication 9 dans lequel ladite came d'appui (200) est montée sur ledit élément de soutien (170).

11. Dispositif de contrôle (100) selon la revendication 9 dans lequel ledit poussoir de came (180, 182, 184, 186, 190, 194) comprend :
un élément coulissant (180) entourant ledit arbre (150) et ayant un flasque (184) définissant une surface frusto-conique (186) de contact avec la came d'appui ; et
un ressort (190) supporté par et entourant ledit arbre pour forcer ladite surface de contact de la came d'appui à venir en contact avec ladite came d'appui.

12. Dispositif de contrôle (100) selon la revendication 9 dans lequel la surface de glissement de ladite came d'appui (200) est configurée pour présenter une première pente au-dessous de son axe central (C/L) et une seconde pente inférieure à ladite première pente au-dessus dudit axe central.

13. Dispositif de contrôle (100) selon la revendication 12 dans lequel ladite came d'appui (200) définit une troisième pente pour définir une position centrale, neutre, dudit arbre (150).

14. Dispositif de contrôle (100) selon la revendication 9 dans lequel ladite came d'appui (200) est divisée en quatre surfaces de glissement (201 - 204) définies par une rainure horizontale (207, 209) et une rainure verticale (206, 208) formées dans ladite came d'appui, ladite fente horizontale et ladite fente verticale étant globalement centrées sur ladite came d'appui pour définir un chemin arrière et avant favorisé (F, R) pour ledit arbre et un chemin haut et bas favorisé (U, D) pour ledit arbre, respectivement.

15. Dispositif de contrôle (100) selon la revendication 14 dans lequel lesdites quatre surfaces de glissement (201 - 204) de ladite came d'appui (200) définissent une troisième pente (215) pour définir une position centrale, neutre, dudit arbre.
